**Europäisches Patentamt**

**European Patent Office**

**Office européen des brevets**

(11) Numéro de publication : **0 469 133 B1**

(12) FASCICULE DE BREVET EUROPEEN

(45) Date de publication du fascicule du brevet :
**29.12.93 Bulletin 93/52**

(51) Int. Cl.[5] : **E21B 41/02, E21B 17/20,**
**F16L 11/08, F16L 11/12**

(21) Numéro de dépôt : **91905090.6**

(22) Date de dépôt : **22.02.91**

(86) Numéro de dépôt international :
**PCT/FR91/00149**

(87) Numéro de publication internationale :
**WO 91/13235 05.09.91 Gazette 91/21**

(54) **DISPOSITIF D'INJECTION DANS UN PUITS D'AGENTS INHIBITEURS DE CORROSION OU DE DEPOT A L'AIDE D'UN TUBE AUXILIAIRE D'INJECTION.**

(30) Priorité : **22.02.90 FR 9002207**

(43) Date de publication de la demande :
**05.02.92 Bulletin 92/06**

(45) Mention de la délivrance du brevet :
**29.12.93 Bulletin 93/52**

(84) Etats contractants désignés :
**AT DE DK ES GB IT NL**

(56) Documents cités :
**US-A- 4 091 843**
**US-A- 4 470 621**

(73) Titulaire : **UNGEMACH, Pierre**
**2, rue Rameau**
**F-60300 Senlis (FR)**

Titulaire : **TURON, Roland**
**6, allée Richard-Wagner**
**F-93420 Villepinte (FR)**
Titulaire : **LUCET, Raymond**
**41, rue de Marolles**
**F-94370 Sucy-en-Brie (FR)**

(72) Inventeur : **UNGEMACH, Pierre**
**2, rue Rameau**
**F-60300 Senlis (FR)**
Inventeur : **TURON, Roland**
**6, allée Richard-Wagner**
**F-93420 Villepinte (FR)**
Inventeur : **LUCET, Raymond**
**41, rue de Marolles**
**F-94370 Sucy-en-Brie (FR)**

(74) Mandataire : **Fréchède, Michel**
**Cabinet Plasseraud 84, rue d'Amsterdam**
**F-75009 Paris (FR)**

EP 0 469 133 B1

## Description

La présente invention concerne un concept nouveau de "tubage auxiliaire d'injection", ci-après désigné, T.A.I. destiné à injecter dans un puits, en continu depuis la surface, sans arrêter l'exploitation un fluide contenant des agents inhibiteurs de corrosion et/ou de dépôt.

L'invention est notamment applicable aux puits géothermiques pour combattre les effets de la thermochimie corrosive et incrustante du fluide géothermal et préserver la longévité des ouvrages. Ces problèmes sont bien connus dans le bassin parisien où de nombreux "doublets" géothermiques (ensemble formé d'un puits de production servant à capter les eaux chaudes du réservoir et d'un puits d'injection utilisé pour réinjecter le fluide dans le réservoir après extraction des calories) ont été réalisés depuis les années 70.

Dans ces installations, le fluide géothermal - eau chaude dont la température est comprise entre 50°C et 85°C et à salinité élevée (15 à 25g/1)- comporte une phase gazeuse dissoute enrichie en $CO_2$ et $H_2O$ qui lui confère une légère acidité (pH de 6 à 6,4). Cette agressivité se traduit dans certaines zones du réservoir capté par des endommagements répétés et accélérés des ouvrages sous l'effet de la corrosion et de dépôts affectant les tubages et du colmatage affectant le découvert (zone de captage du réservoir).

Le mécanisme d'endommagement peut être résumé comme suit :
- corrosion du tubage du puits producteur et, à un degré moindre, de l'ouvrage d'injection ;
- dissolution du fer du tubage et mise en solution avec formation de sulfures de fer ;
- dépôts des sulfures sur les parois de l'acier du tubage producteur sans protection de celui-ci (poursuite de la cinétique de corrosion sous dépôts) ;
- entraînement sous forme particulaire (suspensions solides) dans l'eau produite et encrassement des échangeurs de chaleur, dépôts/incrustation du tubage injecteur et accumulation au fond et sur les parois du découvert ;
- accroissement des pertes de charge, réduction du débit de circulation de la boucle géothermale et colmatage des ouvrages et équipements de surface.

Pour réduire, à défaut d'éradiquer, ces endommagements divers moyens curatifs et préventifs peuvent être utilisés. Les moyens préventifs chimiques sont parmi les plus employés. Basés sur l'injection en fond de puits d'agents inhibiteurs de corrosion/dépôt à fonctions respectivement filmante (corrosion) et dispersante (dépôt), ces procédés n'ont pas démontré que leurs applications en géothermie toute la fiabilité requise, en raison particulièrement de la tenue du T.A.I. Les brevets français 2 463 197 et 2 502 239 décrivent respectivement un procédé inhibiteur par injection d'amines aliphatiques et un dispositif d'injection en fond de puits connecté à l'extrémité d'un tube auxiliaire d'injection.

L'objet même d'un puits est d'extraire un débit le plus élevé possible ; l'encombrement du TAI à l'intérieur de la colonne de production doit donc être minimum pour limiter les pertes de charges. Les tubings usuels en 1" ou 1"1/4 en acier au carbone sont rapidement corrodés au contact du fluide géothermal. Le recours aux "macaronis" 1" en fibre de verre donne lieu régulièrement à des incidents en raison des caractéristiques mécaniques trop faibles du matériau.

Le choix d'alliages nobles (Cr,Mo,Ni, etc...), d'un coût élevé, présente par ailleurs l'inconvénient d'une fragilisation de la structure solide en présence d'$H_2S$ dissous, à faible concentration.

L'invention, objet de la présente demande, pallie les inconvénients des systèmes actuels en utilisant une âme métallique offrant les caractéristiques mécaniques nécessaires pour cette application, enrobée d'un matériau inerte vis à vis du fluide géothermal, tout en restant d'un diamètre limité.

La compréhension de l'invention et de ses avantages sera facilitée par la description d'un exemple de réalisation illustré par les figures annexées ci-après :
- la figure 1 présente un exemple d'application de tube auxiliaire d'injection dans un puits de production équipé d'une pompe immergée ;
- la figure 2 présente une coupe d'un tube auxiliaire d'injection réalisé conformément à l'invention objet de la présente demande.
- la figure 3 représente en ses points a, b, c, et d, une vue en coupe de différents modes de réalisation particuliers d'un tube auxiliaire d'injection conforme à l'objet de la présente invention.

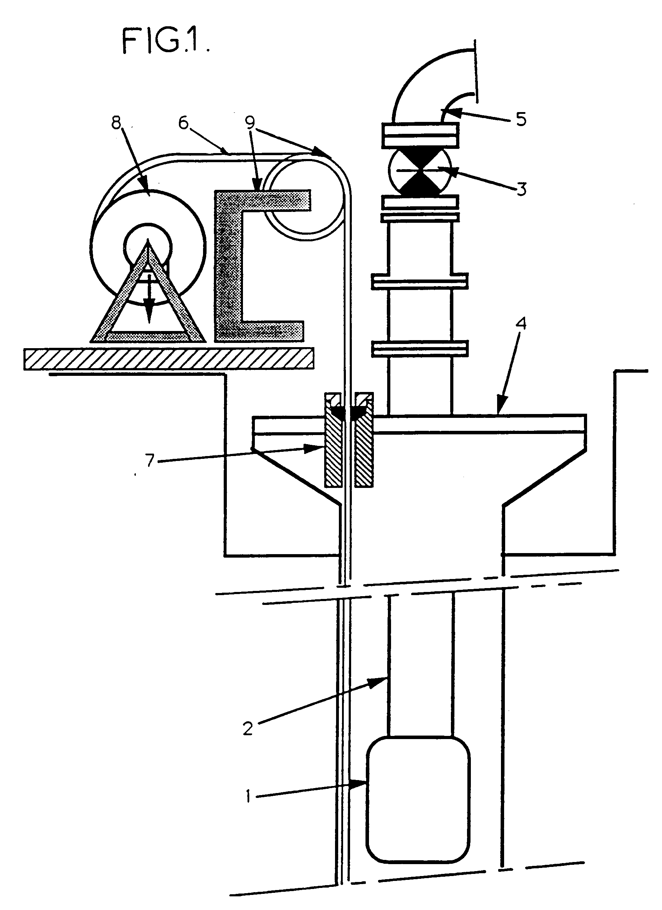

Le fluide géothermal sur la figure 1, est refoulé par la pompe 1 dans le tubage de production 2, et, après passage dans la vanne maitresse 3 de la tête de puits 4 est envoyé dans le réseau de surface 5 vers les échangeurs. Le tube auxiliaire d'injection 6 est introduit dans la tête de puits 4 par l'intermédiaire d'un presse étoupe ("stuffig box") 7, assurant l'étanchéité du TAI sur la tête de puits 4 même lorsque celui-ci est en mouvement, notamment lors de sa mise en place. En surface, le TAI est enroulé sur un touret 8 permettant de positionner l'extrémité inférieure du TAI à la profondeur voulue. Entre le touret 8 et le presse étoupe 7, un réa 9 assure le support du T.A.I. avec un rayon d'enroulement compatible avec ses caractéristiques et le maintient en position.

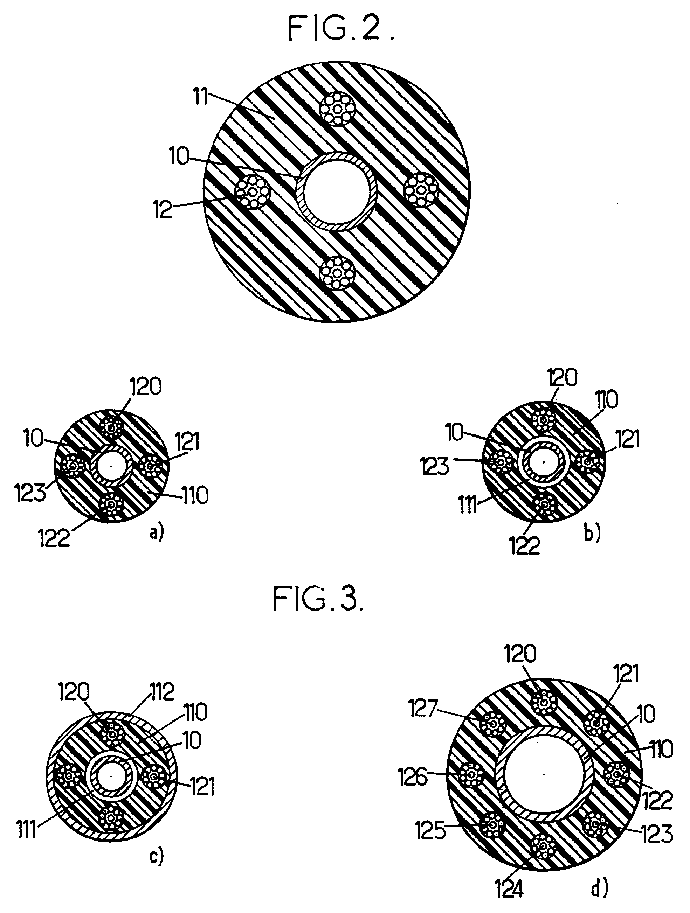

Un exemple de l'invention, objet de la présente demande, est présenté sur la figure 2. Celle-ci comprend une âme tubulaire mécanique 10 servant d'une part à véhiculer les agents inhibiteurs et d'autre part à donner les caractéristiques mécaniques nécessaires à l'injection des agents inhibiteurs. L'extérieur de l'âme mécanique est enrobée d'un matériau 11 électrochimiquement inerte vis à vis du fluide capté ; cet enrobage pourra être réalisé avec une machine de fabrication en continu, permettant de noyer dans le matériau 11 l'âme tubulaire 10 et les câbles de soutien 12. Cette réalisation pourra, par exemple, utiliser les techniques d'extrusion ou de pultrusion. Dans les applications courantes, le matériau d'enrobage 11 sera un matériau polymérique résistant bien aux contraintes mécaniques d'utilisation et aux contraintes thermiques ou chimiques. Certaines applications pourront, par exemple, justifier l'utilisation d'un élastomère, d'un polyamide ou de matériaux type PTFE (téflon) notamment en cas de problème de température. Le choix précis du matériau constituant l'enrobage 11 devra tenir compte de l'environnement spécifique de l'application : géothermie, pétrole, température ... Noyés dans l'enrobage 11 et à l'extérieur du tube 10, des cables de soutien armés en acier 12 permettent d'une part de protéger le tube 10 en cas de détérioration ou d'usure ponctuelle de l'enrobage 11, par exemple, à la suite de descentes répétées d'instruments de mesure dans le puits, et d'autre part de conférer au TAI ainsi constitué, des caractéristiques mécaniques autorisant des mises en place/retraits en toute sécurité, même en cas de rupture du tube 10. L'isolement par le matériau d'enrobage 11 des masses métalliques en présence évente la formation de couples galvaniques.

Dans un mode préféré de réalisation de l'invention, le diamètre extérieur du TAI terminé est en 1" (25,4 mm), pour rester dans les standards pétrole ; l'âme 10 utilise un matériau devant résister aux formulations inhibitrices et pouvant être un tube inox 316 L, de diamètre extérieur 10 mm et intérieur 8 mm. D'autres applications pourront utiliser des matériaux du type (mais non limités à) Incoloy 825, Inconel 625, Hasteloy. Le nombre des câbles de soutien 12, de préférence 4, pourra varier en fonction des applications. Sur la figure 2, le diamètre extérieur des câbles 12 est de 5 mm ; celui-ci pourra varier en fonction des standards disponibles et des dimensions des autres composants. Par exemple, dans un autre mode de réalisation le TAI pourra avoir un diamètre extérieur de 1"1/4 (31,75mm) et l'âme 10, un diamètre extérieur de 12 mm et un diamètre inférieur de 10 mm. Pour des raisons évidentes, le coefficient d'élongation du matériau constituant les câbles 12 est inférieur à celui du tube 10. Ce concept pourra être utilisé aussi bien en mode "résident" (mis en place à demeure) qu'en mode temporaire, monté sur une unité dite "coiled tubing"(tubage bobiné) pour des injections "à la demande".

Une description plus détaillée de différentes variantes de réalisation d'un tube auxiliaire d'injection conforme à l'objet de la présente invention sera donnée en liaison avec la figure 3.

Selon le point a) de la figure précitée, le tube auxiliaire d'injection 6 comporte l'âme centrale tubulaire métallique 10, et un premier encapsulage 110 cylindrique, formé par le matériau 11, enrobant l'âme centrale tubulaire métallique 10. En outre, quatre câbles de soutien notés 120,121,122,123 sont disposés dans le premier encapsulage, symétriquement par rapport à l'axe longitudinal de symétrie de l'âme centrale 10. De préférence, les câbles de soutien 120, 121, 122, 123 sont placés deux à deux en vis à vis dans des plans orthogonaux.

Selon le point b) de cette même figure 3, un deuxième encapsulage 111 est prévu, entre l'âme centrale tubulaire métallique 10 et le premier encapsulage 110. Ce deuxième encapsulage peut avantageusement être formé par un matériau choisi pour assurer une protection particulière de l'âme centrale tubulaire 10, en fonction de l'application choisie.

Au point c) de la figure 3 précitée, un troisième encapsulage 112 est prévu, de façon à enrober le premier encapsulage 110. Ce troisième encapsulage formant manchon externe peut être formé par un matériau permettant de renforcer l'étanchéité de l'ensemble aux agents extérieurs. Lorsque le tube auxiliaire d'injection est utilisé en service mode utilisation, ainsi que représenté au point d) de la figure 3, il peut être avantageux, afin de renforcer la tenue mécanique du tube TAI, tout en conservant ses qualités de flexibilité à l'enroulement, de prévoir huit câbles de soutien notés 120 à 127. Ces cables sont avantageusement disposés symétriquement par rapport à l'axe longitudinal de symétrie de l'âme centrale.

A titre d'exemple non limitatif les premier 110, deuxième 111 et troisième 112 encapsulage pourront être choisis parmi les matériaux ci-après:

Fig. 3b)

| 2ème encapsulage 111 | 1er Encapsulage 110 |
|---|---|
| Polyamide fluoré(PVDF) | PA 11 |
| Polyamide 11 (PA11) | Polypropylène copolymère(PP) |
| PVDF | PP |
| Chlorotrifluoro Ethylène (Halar) | PA 11 |
| Halar | PVDF |

Fig. 3c)
1er encapsulage 110  2è encapsulage 111  3è encapsulage 112

| PP | PA 11 | EPDM/polypropylène |
|---|---|---|
| PP | PVDF | EPDM/polypropylène |

En outre et de manière avantageuse, on notera que les câbles de soutien peuvent, par paire, être utilisés pour la transmission de signaux électriques de commande, lesquels peuvent être véhiculés jusqu'en fond de puits,au niveau de la tête d'injection.

**Revendications**

1. Dispositif pour injecter depuis la surface des agents inhibiteurs de corrosion et de dépôt dans un puits, sans arrêter l'exploitation, comportant un tube auxiliaire d'injection (6) véhiculant les agents injectés, caractérisé en ce que le tube auxiliaire (6), comporte une âme tubulaire métallique (10) enrobée dans un matériau (11) inerte vis à vis du fluide capté par le puits et des câbles de soutien (12) disposés autour de l'âme tubulaire (10), enrobés eux aussi dans le matériau (11) apte à donner au dispositif une résistance mécanique nécessaire aux opérations de descente/ remontée et assurant par ailleurs une protection mécanique secondaire du tube (10) en cas de détérioration de l'enrobage (11), l'enrobage (11) assurant pour sa part la protection du tube (10) vis à vis de l'agressivité du fluide capté par le puits.

2. Dispositif selon revendication 1, caractérisé en ce que le dit tube auxiliaire (6) est réalisé en continu sur une grande longueur et enroulé sur un touret (8) permettant une mise en place et un stockage en surface aisés.

3. Dispositif selon les revendications 1 et 2, caractérisé en ce que le dit tube auxiliaire (6) est monté sur une unité mobile type "coiled tubing" (tubage bobiné) pour des interventions à la demande.

4. Dispositif selon les revendications 1 et 2 caractérisé en ce que le dit tube auxiliaire (6) peut être monté à demeure, en mode résident, sur un puits.

5. Dispositif selon revendication 1, caractérisé en ce que le matériau inerte (11) est un polymère extrudable en continu sur de grandes longueurs.

EP 0 469 133 B1

6. Dispositif selon revendication 1, caractérisé en ce que les câbles de soutien (12) sont des câbles métalliques.

7. Dispositif selon revendication 1, caractérisé en ce que le matériau de l'âme (10) est choisi de manière à résister aux formulations inhibitrices utilisées.

8. Dispositif selon revendication 1, caractérisé en ce que le maintien en surface du tube auxiliaire (6) est assuré par un réa (9) sur lequel le tube auxiliaire d'injection est engagé.

9. Dispositif selon l'une des revendications 1 à 8, caractérisé en ce que le tube auxiliaire d'injection comprend :
   - une âme centrale tubulaire métallique (10)
   - un premier encapsulage cylindrique (110) formé par le matériau (11) enrobant ladite âme centrale tubulaire métallique (10)
   - quatre câbles de soutien (120, 121, 122, 123) disposés dans ledit premier encapsulage, symétriquement par rapport à l'axe de symétrie longitudinal de l'âme centrale, les câbles de soutien étant placés deux à deux en vis à vis dans des plans orthogonaux.

10. Dispositif selon la revendication 9, caractérisé en ce qu'un deuxième encapsulage est prévu entre l'âme centrale tubulaire métallique (10) et le premier encapsulage (110).

11. Dispositif selon la revendication 10, caractérisé en ce qu'un troisième encapsulage est prévu de manière à enrober le premier encapsulage.

12. Dispositif selon l'une des revendications 9 à 11, caractérisé en ce qu'en service mode utilisation le tube auxiliaire d'injection comprend huit câbles de soutien (120 à 127) disposés symétriquement par rapport à l'axe longitudinal de symétrie de l'âme centrale.

**Patentansprüche**

1. Vorrichtung, um von der Oberfläche her in ein Bohrloch Korrosions und Ablagerungs-Inhibitoren ohne Unterbrechung des Betriebs zu injizieren, umfassend ein Injektionshilfsrohr (6), das die injizierten Inhibitoren befördert, dadurch gekennzeichnet, daß das Hilfsrohr (6) einen rohrförmigen, metallischen Kern (10) umfaßt. der in ein gegenüber dem von dem Bohrloch geförderten Fluid inertes Material (11) eingebettet ist, und Stützkabel (12), die um den rohrförmigen Kern (10) angeordnet sind, ebenfalls in das Material (11) eingebettet sind, in der Lage sind, der Vorrichtung eine für den Absenk-/Einhol-Betrieb notwendige mechanische Widerstandsfähigkeit zu verleihen, und unter anderem einen sekundären machanischen Schutz für das Rohr (10) irn Falle einer Beschädigung der Ummantelung (11) sicherstellen, wobei die Ummantelung (11) ihrerseits den Schutz des Rohrs (10) gegenüber der Aggressivität des durch das Bohrloch geförderten Fluids sicherstellt.

2. Vorrichtung nach Anspruch 1, dadurch gekennzeichnet, daß das Hilfsrohr (6) über eine große Länge kontinuierlich gefertigt ist und auf einer Trommel (8) aufgerollt ist, welche ein einfaches Binbringen und eine einfache Lagerung an der Oberfläche ermöglicht.

3. Vorrichtung nach den Ansprüchen 1 und 2, dadurch gekennzeichnet, daß das Hilfsrohr (6) auf einer beweglichen Einheit des "coiled tubing" (aufgewickelte Rohr leitung)-Typs angebracht ist zum Einsatz bei Bedarf

4. Vorrichtung nach den Ansprüchen 1 und 2, dadurch gekennzeichnet, daß das Hilfsrohr (6) an einem Bohrloch in residentem Modus auf Dauer angebracht sein kann.

5. Vorrichtung nach Anspruch 1, dadurch gekennzeichnet, daß das inerte Material (11) ein über große Längen kontinuierlich extrudierbares Polymer ist.

6. Vorrichtung nach Anspruch 1, dadurch gekennzeichnet, daß die Stützkabel (12) metallische Kabel sind.

7. Vorrichtung nach Anspruch 1, dadurch gekennzeichnet, daß das Material des Kerns (10) derart gewählt ist, daß es den verwendeten Inhibitor-Formulierungen widersteht.

**8.** Vorrichtung nach Anspruch 1, dadurch gekennzeichnet, daß der Halt des Hilfsrohrs (6) an der Oberfläche durch eine Rolle (9) sichergestellt ist, mit welcher das Injektionshilfsrohr in Eingriff steht.

**9.** Vorrichtung nach einem der Ansprüche 1 bis 8, dadurch gekennzeichnet, daß das Injektionshilfsrohr umfaßt:
- einen zentralen, metallischen Rohrkern (10),
- eine erste zylindrische Einkapselung (110), die aus dem Material (11) gebildet ist und den zentralen, metallischen Rohrkern (10) ummantelt,
- vier Stützkabel (120, 121, 122, 123), die in der ersten Einkapselung bezüglich der Symmetrielängsachse des zentralen Kerns symmetrisch angeordnet sind, wobei die Stützkabel paarweise, in orthogonalen Ebenen einander gegenüberliegend angeordnet sind.

**10.** Vorrichtung nach Anspruch 9, dadurch gekennzeichnet, daß eine zweite Einkapselung zwischen dem zentralen, metallischen Rohrkern (10) und der ersten Einkapselung (110) vorgesehen ist.

**11.** Vorrichtung nach Anspruch 10, dadurch gekennzeichnet, daß eine dritte Einkapselung vorgesehen ist, welche die erste Einkapselung ummantelt.

**12.** Vorrichtung nach einem der Ansprüche 9 bis 11, dadurch gekennzeichnet, daß das Injektionshilfsrohr bei Servicemodus-Verwendung acht Stützkabel (120 bis 127) umfaßt, welche bezüglich der Symmetrielängsachse des zentralen Kerns symmetrisch angeordnet sind.

## Claims

**1.** Device for injecting corrosion and deposit inhibiting agents in a well, from the surface, without stopping working, comprising an auxiliary injection tube (6) conveying the injected agents, characterized in that the auxiliary injection tube (6) comprises a metal tubular web (10) coated with a material (11) which is inert with respect to the fluid collected by the well and support cables (12) disposed about the tubular web (10) which are also coated with the material (11) adapted for giving to the device the mechanical strength required for the lowering/raising operations and further providing secondary mechanical protection of the tube (10) in the case of damage to the coating (11), the coating (11) providing protection of the tube (10) with respect to the aggressiveness of the fluid collected by the well.

**2.** Device according to claim 1, characterized in that said auxiliary tube (6) is made continuously in a great length and wound on a drum (8) permitting ready positioning and storage on the surface.

**3.** Device according to claims 1 and 2, characterized in that said auxiliary tube (6) is mounted on a mobile unit of "coiled tubing" type for operations on request.

**4.** Device according to claims 1 and 2, characterized in that said auxiliary tube (6) may be mounted permanently, in resident mode, on a well.

**5.** Device according to claim 1, characterized in that the inert material (11) is a polymer which is continuously extrudable in great lengths.

**6.** Device according to claim 1, characterized in that the support cables (12) are metal cables.

**7.** Device according to claim 1, characterized in that the material of the web (10) is chosen so as to withstand the inhibiting formulations used.

**8.** Device according to claim 1, characterized in that the auxiliary tube (6) is held in position on the surface by a sheave (9) on which the auxiliary injection tube is engaged.

**9.** Device according to one of claims 1 to 8, characterized in that the auxiliary injection tube comprises:
- a central metal tubular web (10),
- a first cylindrical encapsulation (110) formed by the material (11) coating said central metal tubular web (10),
- four support cables (120, 121, 122, 123) disposed in the first encapsulation, symmetrically with respect to the longitudinal axis of symmetry of the central web, the support cables being placed facing each other in twos in orthogonal planes.

10. Device according to claim 9, characterized in that a second encapsulation is provided between the central metal tubular web (10) and the first encapsulation (110).

11. Device according to claim 10, characterized in that a third encapsulation is provided so as to coat the first encapsulation.

12. Device according to one of claims 9 to 11, characterized in that in user mode service the auxiliary injection tube comprises eight support cables (120 to 127) disposed symmetrically with respect to the longitudinal axis of symmetry of the central web.

FIG.1.

# FIG.2.

a)

b)

# FIG.3.

c)

d)